# EUROPEAN PATENT SPECIFICATION

(11) **EP 1 542 855 B1**
(45) Date of publication and mention of the grant of the patent: **11.05.2011**
(21) Application number: 03792008.9
(22) Date of filing: 28.08.2003
(51) Int. Cl.: B29C 65/16, C08K 5/098

(54) **PROCESS FOR LASER WELDING POLY(ETHYLENE TEREPHTHALATE) AND ARTICLE OBTAINED BY THE PROCESS**
VERFAHREN ZUM LASERSCHWEISSEN VON POLYETHYLENTEREPHTHALAT UND DADURCH HERGESTELLTER GEGENSTAND
PROCEDE DE SOUDAGE AU LASER DE POLY(TEREPHTALATE D'ETHYLENE) ET ARTICLE OBTENU PAR LE PROCEDE

(30) Priority: 29.08.2002 US 406885 P
(43) Date of publication of application: 22.06.2005
(73) Proprietor: E.I. DU PONT DE NEMOURS AND COMPANY, Wilmington, DE 19898 (US)
(72) Inventor: KOBAYASHI, Toshikazu, Chadds Ford, PA 19317 (US)
(74) Representative: Morf, Jan Stefan
(86) International application number: PCT/US2003/027691
(87) International publication number: WO 2004/020178

(56) References cited:
- WO-A-02/057353
- US-A- 5 893 959
- US-A1- 2002 002 225

## Description

### Field of the Invention

This invention relates to an improved process for laser welding parts comprising poly(ethylene terephthalate) and one or more nucleating agents that have low levels of moisture absorption.

### Background of the Invention

It is often desired to produce molded plastic parts that can be mechanically assembled into more complex parts. Traditionally, plastic parts have been assembled by gluing or bolting them together or using snap-fit connections. These methods suffer from the drawback that they add complex additional steps to the assembly process. Snap-fit connections are often not gas- and liquid-tight and require complex designs. Newer techniques are vibration and ultrasonic welding, but these can also require complex part designs and welding apparatuses. Additionally, the friction from the process can generate dust that can contaminate the inside of the parts. This is a particular problem when sensitive electrical or electronic components are involved.

A more recently-developed technique is laser welding. In this method, two polymeric objects to be joined have different levels of light transmission at the wavelength of the laser that is used. One object is at least partially transparent to the wavelength of the laser light (and referred to as the "relatively transparent" object), while the second part absorbs a significant portion of the incident radiation (and is referred to as the "relatively opaque" object). Each of the objects presents a faying surface and the relatively transparent object present an impinging surface, opposite the faying surface thereof. The faying surfaces are brought into contact, thus forming a juncture. A laser beam is directed at the impinging surface of the relatively transparent object such that it passes through the first object and irradiates the faying surface of the second object, causing the first and second objects to be welded at the juncture of the faying surfaces. See generally U.S. Patent 5,893,959.

WO-A-02057353 discloses dyed (black) thermoplastic molding compositions as the transparent layer for laser welding. US-A-2002002225 discloses laser welding of black thermoplastic molding compositions that comprise a dye combination that gives the compositions transparency to laser light and thereby facilitates their use as the transparent layer for laser welding.

This process can be very clean, simple, and fast and provides very strong, easily reproducible welds and significant design flexibility.

The degree to which a material will transmit incident laser radiation is a function of not only the chemical compositions of the components of the material, but the arrangement of the components within the material. For example, if the material is a polymer matrix containing dispersed additives that have a large enough average particle size, these particles can scatter incident radiation, which will lower the light transmission rates, even if the components of the material don't absorb the radiation.

In order to generate a strong weld, it is preferable that the two objects be made from thermoplastic materials. Due to their excellent physical properties, semicrystalline polyesters are often used to produce parts for assembly by the various methods mentioned above. It would also be desirable to use polyesters in laser-welding applications; however to do so, it is necessary that a polyester composition be available that has a high degree of transmittance of laser light at a wavelength suitable for laser welding.

Poly(ethylene terephthalate) homopolymer and its semicrystalline copolymers (referred to collectively as "PET") are slow to crystallize, and hence difficult to mold. They require long molding cycle times, which confers significant economic disadvantages. As a result, a nucleating agent is often added to the polymer to speed up crystallization and shorten cycle times.

A further advantage of semicrystalline polyesters is that they have low levels of moisture absorption, which means that parts made from PET have few problems with surface blistering when heated or used over time. However, when certain additives are blended with polyesters, they can absorb significant amounts of moisture, which can lead to surface blistering and degradation over time. This is a particular problem in laser welding applications, as this blistering and degradation will damage the appearance and or mechanical integrity of the weld.

Thus, it would be highly desirable to obtain a PET composition that has good moldability, good weldability, and which is highly resistant to absorbing moisture.

### Summary of the Invention

The present inventor has discovered that by limiting the type of nucleating agents used in combination with PET, for instance certain nucleating agents that absorb no more than 7% of their weight in water, they are able to obtain a PET composition that has good moldability and good laser weldabality.

In accordance with the present invention, there is disclosed an improvement in a welding process for welding a first polymeric object to a second polymeric object utilizing laser radiation, wherein said first polymeric object is relatively transparent to said laser radiation and said second object is relatively opaque to said laser radiation, said first and second objects each presenting a faying surface, said first object presenting an impinging surface, opposite said faying surface thereof; said process including the steps of bringing the faying surfaces of said first and second objects into physical contact so as to form a juncture therebetween and irradiating said first and second objects with said laser radiation such that said laser radiation impinges the impinging surface, passes through said first object and irradiates said faying surface of said second object, causing said first and second objects to be welded at the juncture of the faying surfaces, the improvement comprising:
said first polymeric object being formed from a polymeric component comprising:
   (i) poly(ethylene terephthalate); and
   (ii) one or more nucleating agents;
said one or more nucleating agents each being characterized in the fact that they absorb no more than 7% of their weight in water;
said one or more nucleating agents being present in said polymeric component in an amount sufficient such that said polymeric component has a crystallization half time of less than 20 minutes at a temperature of 105 °C when measured by differential scanning calorimetry; and
said first polymeric object exhibits, through a thickness between said faying surface of said first object and said impinging surface, a diffuse transmittance of at least 15% of said laser radiation.
Laser-welded articles made from the method of the invention are also disclosed herein.

### Brief Description of the Drawings

Figs. 1, 2 and 3 are a side elevation, top plan view and a perspective view, respectively, of a test piece 11 for measuring weld strength as reported herein.
Fig. 4 is a perspective view of test pieces 11', a relatively transparent object and 11", a relatively opaque object, having their respective faying surfaces in contact and placed in position for a laser welding.

### Detailed Description of the Invention

It has been discovered that a PET composition for use in forming laser weldable parts in accordance with the invention can be obtained when the PET is melt-blended with a suitable nucleating agent, i.e. one that is easily dispersed into the PET and picks up little moisture from the atmosphere.

By "poly(ethylene terephthalate)" or "PET" herein is meant poly(ethylene terephthalate) homopolymer, copolymers of poly(ethylene terephthalate) derived from one or more additional monomers, a blend of the homopolymer with one or more such copolymers or a blend of two or more such copolymers. The copolymer may contain up to about 15 mole percent of one or more additional monomers such that the copolymer is semicrystalline. In order to be considered semicrystalline, the copolymer must have a heat of fusion of at least 5 J/g. Herein heats of fusion are determined by ASTM D3418-82, at a heating rate of 20 °C/min. The peak of the melting endotherm is taken as the melting point. The heat of fusion is taken as the area under the melting endotherm. All of these are measured on the second heat, meaning that the sample is heated at 20 °C/min until the melting point and/or glass transition point, whichever is higher, is exceeded, and then the sample is cooled at 20 °C/min to 30 °C. The heating cycle is begins again and measurements are then taken on a second heat, also done at 20 °C/min. Suitable comonomers include, but are not limited to, isophthalic acid and its functional equivalents, naphthalene dicarboxylic acid and its functional equivalents, 1,3-propane diol, 1,4-butane diol, cyclohexanedimethanol, di(ethylene glycol), and ethoxylated bisphenol A. Preferred is isophthalic acid.

A wide range of materials are suitable for use as nucleating agents for PET as taught in the following references and references contained therein: R. Legras, C. Bailly, M. Daumerie, J. M. Dekoninck, J. P. Mercier, V. Zichy, E. Nield Polymer 1984, 25, 835; J. W. Glimer; R. P. Neu; Y. J. Liu; A. K.-Y. Jen Polymer Engineering & Science 1995, 35, 1407; D. Garcia J. Poly. Sci. Poly. Phys. Ed. 1984, 22, 2063; US Patent Re. 32,334. Effective nucleating agents for PET are generally materials that are capable of transferring sodium ions to the PET.

The nucleating agent used in the present invention has a low level of moisture absorption as determined by a method described below. The nucleating agent will gain less than 7%, or preferably less than 5%, or more preferably less than 4%, or still more preferably less than 3%, or even more preferably less than 2%, or yet more preferably less than 1 % of its weight under such conditions.

It is also preferred that the nucleating agent can be conveniently well-dispersed into the polymer. If it forms domains that are too large, they may scatter so much incident light that the resulting material will not be transparent for purposes of laser welding. The transparency of a material is determined by measuring the diffuse transmittance of a given thickness of a sample of the blend. If the sample at the given thickness has a diffuse transmittance of at least 15% at the frequency of the laser, it is usually suitable for laser welding at that frequency and thickness.

Suitable nucleating agents are compounds with number average molecular weights of less than about 5000, preferably less than about 2000, that are preferably molten under melt-mixing conditions and thus disperse thoroughly, and that absorb low levels of moisture, such as sodium montanate, sodium stearate, and other sodium neutralized aliphatic carboxylic acids with 12-40 carbon atoms. By "sodium neutralized aliphatic carboxylic acid" is meant a sodium salt of an aliphatic carboxylic acid.

Trisodium phosphate can be well-dispersed into small particles that do not scatter enough light to interfere with laser welding, but it absorbs a significant amount of moisture, which leads to blistering and/or the degradation of a laser weld, which renders it unsuitable for use in this invention.

Most polymeric nucleating agents are not useful because they tend to form large domains that scatter light. For example, common general-purpose nucleating agents for PET are sodium neutralized ethylene/methacrylic acid copolymers as taught in US Patent Re. 32,334. However, sodium neutralized ethylene/methacrylic acid copolymers are not compatible with PET and form large domains that scatter enough light to render them unsuitable as components for a transparent laser welding part when they are used in high enough loadings to be effective as nucleating agents.

An acceptable polymeric nucleating agent is sodium PET, where "sodium PET" refers to PET in which the protons of some of the acid end groups have been replaced with sodium ions. Sodium is typically present in the sodium PET about 0.10 to about 0.40 weight percent based on the weight of the PET.

The nucleating agent of this invention is preferably present in an effective amount to provide good moldability. To determine whether any particular amount is an effective amount, the crystallization half times of blends of the compositions of this invention are determined using a method described below. Samples that have crystallization half times of less than 20 minutes at 105 °C in this test are considered to be effectively nucleated.

The composition used in the present invention may also include up to 50 weight percent based on the total amount of polymer of one or more additional polymers such as polycarbonate, polyarylate, poly(ethylene naphthalate), poly(butylene terephthalate), and poly(butylene terephthalate) copolymers, as long as the presence of these additional polymers does not reduce the optical transmittance of the material to a point at which laser welding is unfeasible.

The composition used in the present invention may also contain up to 3 weight percent of a compound or resin containing two or more epoxy groups, such as a condensation product of epichlorohydrin and bisphenol A.

Further, the composition used in the present invention may contain additional additives such as inorganic fillers and reinforcing agents such as glass fibers, hollow spheres, bead, flake, or milled glass; flame retardants; pigments; dyes; other colorants; plasticizers; impact modifiers; lubricants; mold-release agents; heat stabilizers; antioxidants; viscosity modifiers; and UV stabilizers, as long as the presence of these additional polymers does not reduce the optical transmittance of the material to a point at which laser welding is unfeasible. Preferred additives are chopped glass fibers, which may be present in from about 5 to about 50 weight percent based on the total composition.

The compositions used in the present invention are in the form of a blend, wherein all of the non-polymeric ingredients are homogeneously dispersed in and bound by the polymer matrix, such that the blend forms a unified whole. The blend may be obtained by combining the component materials using any melt-mixing method. The component materials may be mixed to homogeneity using a melt-mixer such as a single or twin-screw extruder, blender, kneader, Banbury mixer, etc. to give a resin composition. Or, part of the materials may be mixed in a melt-mixer, and the rest of the materials may then be added and further melt-mixed until homogeneous.

Molding of the polyester compositions used in the present invention into parts for laser welding can be carried out according to methods known to those skilled in the art. Preferred are commonly used melt-molding methods such as injection molding, extrusion molding, blow molding, and injection blow molding.

The present invention also includes any laser welded article made from the process of the invention. Useful articles are housings, including those for electrical and electronic sensors, automotive fittings and headlamp housings, pumps, motors, valves, displays, connectors, couplings, and inkjet cartridges.

### Examples

### General Procedures

### Nucleating Agent Moisture Absorption Test

A 5 g sample of the nucleating agent is dried in a vacuum oven at about 560 torr with a slow nitrogen bleed at 150 °C for 4 hours. The sample is then cooled in a desiccator, weighed, and held at 50% relative humidity (RH) and 23 °C for 24 hours. The sample is then reweighed and the weight percent of moisture uptake relative to the dried sample is determined.

### Compounding and Molding

The resin mixtures were prepared by compounding on a 30mm Werner and Pfleiderer twin-screw extruder at rate of 50 pounds per hour and 300 RPM. The glass fibers were side-fed and, as will be understood by those skilled in the art, the screw design is typical of those used for making glass-reinforced polyesters. The barrel temperatures were set to 280 °C and melt temperatures were usually about 320 °C. Exiting the extruder, the polymer was passed through a die to form strands that were frozen in a quench tank and subsequently chopped to make pellets.

The compounded product was dried and then molded using laboratory size injection molding machines into typical ASTM testing bars as well as the bars required for the laser welding tests as explained below. Barrel temperatures were set to 280 °C and the mold temperature was 110 °C.

### Mechanical Properties

Tensile strengths (TS) and percent elongations at break were determined using ASTM method D-638.

### Light Transmittance

Light transmittance was determined using a Varian® Cary® 5 spectrophotometer. A 940 nm light source was directed at a 2 mm thick molded sample and the diffuse light transmittance was measured within a 150 mm diameter integrating sphere. Alternatively, diffuse light transmittance was determined using a Shimadzu® UV-3100 spectrophotometer using a 120 mm diameter integrating sphere. The results from these two instruments were consistent to within about 1%.

### Laser Weld Strength

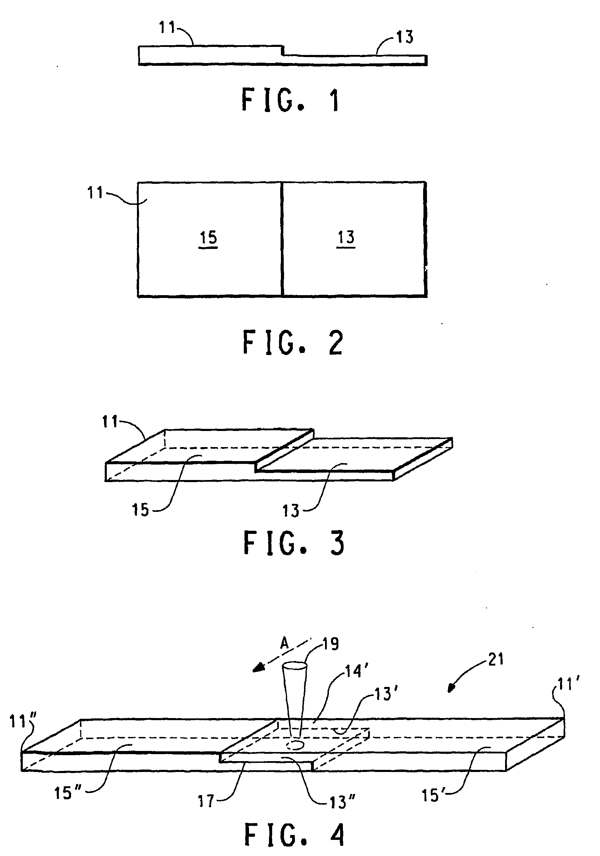

Referring now to the drawings and in particular Fig. 1 - 3, there is disclosed the geometry of the test pieces 11 used to measure weld strength as reported herein. The test pieces 11 are generally rectangular in shape, having dimensions of 70 mm X 18 mm X 3 mm and a 20 mm deep half lap at one end. The half lap defines a faying surface 13 and a shoulder 15.

Referring now to Fig. 4, there is illustrated a pair of test pieces, 11' and 11", that are, respectively, a relatively transparent polymeric object and a relatively opaque polymeric object. The faying surfaces 13' and 13" of pieces 11' and 11" have been brought into contact so as to form a juncture 17 therebetween. Relatively transparent piece 11' defines an impinging surface 14' that is impinged by laser radiation 19 moving in the direction of arrow A. Laser radiation 19 passes through relatively transparent piece 11' and irradiates the faying surface 13" of relatively opaque piece 11", causing pieces 11' and 11" to be welded together at juncture 17, thus forming a test bar, shown generally at 21.

In accordance with the invention, relatively transparent compositions (as disclosed in Examples 2 - 9) were dried and molded into test pieces that were conditioned at 23 °C and 65% relative humidity for 24 hours. By way of comparison (as disclosed in Comparative Examples B - G) compositions outside the scope of the present invention were also molded into test pieces, 11. A relatively opaque composition, made from Rynite® 530 BK, a 30% glass reinforced PET containing carbon black manufactured by E.I. DuPont de Neumours, Inc. Wilmington, DE, was similarly dried and molded into test pieces 11". Test pieces 11' and 11" and test pieces 11 and 11" were then welded together as described above, with a clamped pressure of 0.3 MPa therebetween to form test bars 21. Laser radiation was scanned in a single pass across the width of test pieces 11' and 11 at 500 cm/min with a Rofin-Sinar Laser GmbH 940 nm diode laser operating at 50 W. The test bars were further conditioned for 24 hours at 23 °C and 65% relative humidity. The force required to separate test pieces 11' and 11" and 11 and 11" was determined using an Instron® tester clamped at the shoulder of the test bars, applying tensile force in the longitudinal direction of the test bars 21. In Tables 2, 3, and 5 a value of at least 10 MPa indicates a good laser weld.

### Crystallization Half Time

The crystallization half times of melt-blends of the compositions of this invention are determined using a differential scanning calorimeter (DSC). A 6-8 mg sample cut from the middle section of a molded bar is heated at 50 °C/minute in a DSC to 290 °C and held for 3 minutes then quenched in liquid nitrogen. The sample is then transferred to the cell of a Perkin-Elmer® DSC-7 or other DSC that can be heated very quickly to a set temperature and maintain that temperature, without significant temperature overshoot. The initial temperature of the DSC is set to zero, and upon addition of the sample, the cell is heated to 105 °C at 200 °C/min and held at 105 °C. The exotherm corresponding to crystallization is measured by the DSC as a function of time. The time corresponding to the maximum of the exotherm is assigned to be the crystallization half time. Samples that have crystallization half times of less than 20 minutes at 105 °C in the test are considered to be effectively nucleated. Results for Examples 2, 3, and 6 and Comparative Example B are shown in Table 4. Samples from Examples 2, 3, and 6 were run in duplicate.

### Moldability

In Table 2, the level of moldability was deemed to be good if a cycle time of no more than 45 seconds could be achieved while molding standard ASTM tensile bars using a laboratory-scale molding machine.

### Materials Used

The materials used in the tables describing the examples are identified as follows:
Crystal® 3934 is a 0.67 inherent viscosity PET homopolymer manufactured by E.I. DuPont de Neumours, Inc., Wilmington, DE.
Crystar® 3931 is a PET copolymer containing 3 mole percent isophthalic acid manufactured by E.I. DuPont de Neumours, Inc., Wilmington, DE.
PET with IPA is a 0.9 inherent viscosity PET copolymer containing 1.6 mole percent of isophthalic acid.
HiPERTUF® 92004 is a poly(ethylene naphthalate) manufactured by M&G Polymers USA, LLC., Houston, TX.
Crastin® 6150 is a poly(butylene terephthalate) copolymer manufactured by E.I. DuPont de Neumours, Inc., Wilmington, DE containing 7.5 mole percent of Dianol® 220, an ethoxylated bisphenol A manufactured by Akzo Nobel Chemicals, Inc., Chicago, IL.
PTS is pentaerythritol tetrastearate.
EPON® 1009F is an epichlorohydrin/bisphenol A condensation product manufactured by Resolution Performance Products, Houston, TX.
NAV 101 is sodium montanate manufactured by Clariant, Inc., Charlotte, NC. Surlyn® 8920 is a sodium neutralized ethylene/methacrylic acid copolymer manufactured by E.I. DuPont de Neumours, Inc., Wilmington, DE.
Irganox® 1010 is an antioxidant manufactured by Ciba Specialty Chemicals, Inc., Tarrytown, NY.
PPG 3563 is glass fibers manufactured by PPG Industries, Inc. Pittsburgh, PA.

**Table 1**

| | **Ex. 1** | **Comp. Ex. A** |
|---|---|---|
| Nucleating agent | NAV 101 | Trisodium phosphate |
| Weight after drying (g) | 4.993 | 4.875 |
| Weight after 24 h at 50% RH and 23 °C (g) | 5.016 | 6.338 |
| Percent weight gain | 0.45 | 30.0 |

**Table 2**

| | **Ex. 2** | **Ex. 3** | **Ex. 4** | **Ex. 5** | **Ex. 6** | **Ex. 7** |
|---|---|---|---|---|---|---|
| | | | | | | |
| Crystar® 3934 | 83.2 | | | | | |
| Crystar® 3931 | | 83.2 | | | 58.2 | 58.2 |
| PET with IPA | | | 83.2 | 83.2 | | |
| HiPERTUF® 92004 | | | | | 10 | |
| Crastin® 6150 | | | | | | 10 |
| PTS | 0.5 | 0.5 | 0.5 | 0.5 | 0.5 | 0.5 |
| EPON® 1009F | 0.6 | 0.6 | 0.6 | 0.6 | 0.6 | 0.6 |
| NAV 101 | 0.5 | 0.5 | 0.5 | | 0.5 | 0.5 |
| Sodium stearate | | | | 0.5 | | |
| Irganox® 1010 | 0.2 | 0.2 | 0.2 | 0.2 | 0.2 | 0.2 |
| PPG 3563 | 15 | 15 | 15 | 15 | 30 | 30 |
| | | | | | | |
| TS (MPa) | 106 | 102 | 98 | 96 | 128 | 119 |
| Elongation (%) | 3.4 | 3.5 | 3.6 | 3.5 | 2.3 | 2.5 |
| Transmittance (%) | 46 | 47 | 45 | 44 | 29 | 30 |
| Weld Strength (MPa) | 15 | 16 | 14 | 16 | 22 | 23 |
| Moldability | Good | Good | Good | Good | Good | Good |

All ingredient quantities are given in weight percent based on the total compostion.

**Table 3**

| | **Comp. Ex. B** | **Comp. Ex. C** | **Comp. Ex. D** | **Comp. Ex. E** |
|---|---|---|---|---|
| | | | | |
| Crystar® 3934 | 83.2 | 80.7 | | |
| Crystar® 3931 | | | 70.9 | |
| PET with IPA | | | | 65.9 |
| HiPERTUF® 92004 | | | 10 | |
| PTS | 0.5 | 0.5 | 0.5 | 0.5 |
| EPON® 1009F | 0.6 | 0.6 | 0.6 | 0.6 |
| Surlyn® 8920 | 0.5 | 3 | 3 | 3 |
| Irganox® 1010 | 0.2 | 0.2 | | |
| PPG 3563 | 15 | 15 | 15 | 30 |
| | | | | |
| TS (MPa) | 101 | 99 | 97 | 129 |
| Elongation (%) | 3.6 | 3.5 | 3.6 | 2.6 |
| Transmittance (%) | 38 | 12 | 11 | 6 |
| Weld Strength (MPa) | 16 | 2 | 3 | 3 |
| Moldability | Poor | Good | Good | Good |

All ingredient quantities are given in weight percent based on the total composition.

**Table 4**

| | **Crystallization half time (min)** | |
|---|---|---|
| | **Sample 1** | **Sample 2** |
| | | |
| Example 2 | 2.35 | 2.27 |
| Example 3 | 2.43 | 2.42 |
| Example 6 | 9.58 | 11.15 |
| Comparative Example B | 26.78 | |

**Table 5**

| | **Ex. 8** | **Comp. Ex. F** | **Ex. 9** | **Comp. Ex. G** |
|---|---|---|---|---|
| | | | | |
| PET with IPA | 68.3 | 68.3 | 68.3 | 68.3 |
| PTS | 0.5 | 0.5 | 0.5 | 0.5 |
| NAV 101 | 0.4 | | 0.4 | |
| Trisodium phosphate | | 0.4 | | 0.4 |
| EPON® 1009F | 0.6 | 0.6 | 0.6 | 0.6 |
| Irganox® 1010 | 0.2 | 0.2 | 0.2 | 0.2 |
| PPG 3563 | 30 | 30 | 30 | 30 |
| | | | | |
| Transmittance (%) (after conditioning at 23 °C and 65% relative humidity for 24 h) | 44 | 34 | | |
| Transmittance (%) (after conditioning at 80 °C and 95% relative humidity for 1000 h) | | | 35 | 12 |
| Initial weld strength (MPa) | 15 | 13 | 12 | 1 |
| Weld strength after conditioning (MPa) | 13 | 6 | | |

All ingredient quantities are given in weight percent based on the total composition.

### Discussion of the Examples

### Example 1 and Comparative Example A

Sodium montanate (NAV 101) (Example 1) and trisodium phosphate (Comparative Example A) were tested for moisture absorption as described above. Results are given in Table 1. These results clearly demonstrate that trisodium phosphate is not suitable for use in the present invention and that sodium montanate is suitable.

### Examples 2-7 and Comparative Examples B-E

The compositions of Examples 2-7 and Comparative Examples B-E were prepared, molded, and tested as described above. The results are detailed in Tables 2-4. Examples 2-7 demonstrate that when PET is melt-blended with the nucleating agents sodium montanate and sodium stearate, the resulting compositions can be easily molded and effectively laser welded. The crystallization half times given in Table 4 demonstrate that the compositions of Examples 2, 3, and 6 are effectively nucleated.

Comparative Examples B-E demonstrate that a poorly-dispersed polymeric nucleating agent, Surlyn® 8920, provides compositions that are not both easily molded and laser weldable. The low levels of Surlyn® used in Comparative Example B provide a composition with good laser weldabilty, but are not sufficient to adequately nucleate the PET, as is demonstrated by the long crystallization half time shown in Table 4. A comparison with Example 2 shows that the replacement of the Surlyn® of Comparative Example B with an equal amount of the sodium montanate of Example 2 gives a composition that is both effectively nucleated and has good laser weldability. A higher level of Surlyn® is used in Comparative Examples C-E, which gives materials that have good moldabilty. However, they also do not transmit a sufficiently high degree of light to permit effective laser welding.

### Examples 8 and 9 and Comparative Examples F and G

The compositions of Examples 8 and 9 and Comparative Examples F and G were prepared by compounding the ingredients shown in Table 5 using the procedures given above. The compositions were molded into test pieces for laser welding as described above. Five test pieces were made for each experiment and the results given in Table 5 are averages of the results for each of the five pieces. In the case of Example 8 and Comparative Example F, the initial light transmittance was determined on test pieces that had been conditioned for 24 hours at 23 °C and 65% relative humidity and is given in Table 5. These pieces were then, without further treatment, laser welded to pieces made from Rynite® 530 BK (which was first conditioned at 23 °C and 65% relative humidity for 24 hours) to make 10 bars each for the compositions of Example 8 and Comparative Example F. Five bars were conditioned for 24 hours at 23 °C and 65% relative humidity. The weld strengths were determined as described above and are given in Table 5 as "Initial weld strength." Five welded bars were conditioned at 80 °C and 95% relative humidity for 1000 hours and then at 23 °C and 65% relative humidity for 24 hours. The weld strengths of the bars were determined and are given as an average in Table 5 as "Weld strength after conditioning." The laser-welded bars incorporating the composition of Example 8, which uses sodium montanate, a nucleating agent of the present invention, maintained most of the weld strength of the bars that were not conditioned for 1000 hours and the resulting weld strength was still acceptable. The laser welded bars incorporating the composition of Comparative Example F, which uses trisodium phosphate, a nucleating agent outside the scope of the present invention, lost a substantial portion of the weld strength of the bars that were not conditioned for 1000 hours and the resulting weld strength was not acceptable.

In the case of Example 9 and Comparative Example G, the initial light transmittance was determined on test pieces that were conditioned at 80 °C and 95% relative humidity for 1000 hours and then at 23 °C and 65% relative humidity for 24 hours and is given in Table 5. These pieces were then laser welded to pieces made from Rynite® 530 BK (which was first conditioned at 23 °C and 65% relative humidity for 24 hours) as described above. After welding, the bars were conditioned at 23 °C and 65% relative humidity for 24 hours. The weld strengths were then determined as described above and are given in Table 5 as "Initial weld strength." The laser-welded bars incorporating the composition of Example 9, which uses sodium montanate, a nucleating agent of the present invention had an acceptable weld strength, despite the fact that the piece made from the composition of Example 9 had had long-term exposure to significant humidity prior to molding. The laser welded bars incorporating the composition of Comparative Example G, which uses trisodium phosphate, a nucleating agent outside the scope of the present invention had an unacceptable weld strength as a result of the long-term exposure to significant humidity experienced by the piece made from the composition of Comparative Example G.

## Claims

1. Process for welding a first polymeric object to a second polymeric object utilizing laser radiation, wherein said first polymeric object is relatively transparent to said laser radiation and said second object is relatively opaque to said laser radiation, said first and second objects each presenting a faying surface, said first object presenting an impinging surface, opposite said faying surface thereof; said process including the steps of bringing the faying surfaces of said first and second objects into physical contact so as to form a juncture therebetween and irradiating said first and second objects with said laser radiation such that said laser radiation impinges the impinging surface, passes through said first object and irradiates said faying surface of said second object, causing said first and second objects to be welded at the juncture of the faying surfaces, whereby:
said first polymeric object is formed from a polymeric component comprising:
(i) poly(ethylene terephthalate); and
(ii) one or more nucleating agents; ,
said one or more nucleating agents each is **characterized in** the fact that they absorb no more than 7% of their weight in water;
said one or more nucleating agents is present in said polymeric component in an amount sufficient such that said polymeric component has a crystallization half time of less than 20 minutes at a temperature of 105 °C when measured by differential scanning calorimetry; and
said first polymeric object exhibits, through a thickness between said faying surface of said first object and said impinging surface, a diffuse transmittance of at least 15% of said laser radiation.

2. The process according to Claim 1 further comprising said one or more nucleating agents being selected from the group consisting of sodium montanate, sodium stearate, sodium-neutralized aliphatic carboxylic acids with 12 - 40 carbon atoms and sodium PET.

3. The process according to Claim 1 wherein said one or more nucleating agents has a number average molecular weight less than about 5,000.

4. An article of manufacture obtainable by a process for welding a first polymeric object to a second polymeric object utilizing laser radiation, wherein said first polymeric object is relatively transparent to said laser radiation and said second object is relatively opaque to said laser radiation, said first and second objects each presenting a faying surface, said first object presenting an impinging surface, opposite said faying surface thereof; said process including the steps of bringing the faying surfaces of said first and second objects into physical contact so as to form a juncture therebetween and irradiating said first and second objects with said laser radiation such that said laser radiation impinges the impinging surface, passes through said first object and irradiates said faying surface of said second object, causing said first and second objects to be welded at the juncture of the faying surfaces, wherein:
said first polymeric object is formed from a polymeric component comprising:
(i) poly(ethylene terephthalate); and
(ii) one or more nucleating agents;
said one or more nucleating agents are **characterized in** the fact that they absorb no more than 7% of their weight in water;
said one or more nucleating agents are present in said polymeric component in an amount sufficient such that said polymeric component has a crystallization half time of less than 20 minutes at a temperature of 105 °C when measured by differential scanning calorimetry; and
said first polymeric object exhibits, through a thickness between said faying surface of said first object and said impinging surface, a diffuse transmittance of at least 15% of said laser radiation.

5. An article of manufacture in accordance with Claim 4 selected from the group consisting of housings, including those for electrical and electronic sensors and headlamps, pumps, motors, valves, displays, and inkjet cartridges and connectors and couplings.

## Patentansprüche

1. Verfahren zum Schweißen eines ersten polymeren Gegenstands an einen zweiten polymeren Gegenstand unter Anwendung von Laserstrahlung, wobei der erste polymere Gegenstand für Laserstrahlung relativ durchlässig ist und der zweite Gegenstand für Laserstrahlung relativ opak ist, wobei die ersten und zweiten Gegenstände jeweils eine genau passende Oberfläche präsentieren, wobei der erste Gegenstand der genau passenden Oberfläche davon gegenüberliegend eine Auftrefffläche präsentiert; wobei das Verfahren die Schritte des Bringens der genau passenden Oberflächen der ersten und zweiten Gegenstände in physikalischen Kontakt, um eine Verbindung dazwischen zu bilden, und das Bestrahlen der ersten und zweiten Gegenstände mit der Laserstrahlung umfasst, derart, dass die Laserstrahlung auf die Auftrefffläche auftrifft, durch den ersten Gegenstand hindurchgeht und die genau passende Oberfläche des zweiten Gegenstands bestrahlt, wodurch die ersten und zweiten Gegenstände dazu gebracht werden, an der Verbindung der genau passenden Oberflächen verschweißt zu werden, wobei:
der erste polymere Gegenstand aus einer polymeren Komponente gebildet ist umfassend
(i) Poly(ethylenterephthalat); und
(ii) einen oder mehrere Keimbildner;
wobei der eine oder die mehreren Keimbildner durch die Tatsache **gekennzeichnet** ist/sind, dass er/sie nicht mehr als 7 % seines/ihres Gewichts an Wasser absorbiert/adsorbieren;
wobei der eine oder die mehreren Keimbildner in der polymeren Komponente in einer Menge vorliegt/vorliegen, die ausreicht, dass die polymere Komponente eine Kristallisationshalbwertzeit von weniger als 20 Minuten bei einer Temperatur von 105°C aufweist, wenn sie durch Differentialscanningkalorimetrie gemessen wird; und
der erste polymere Gegenstand durch eine Dicke zwischen der genau passenden Oberfläche des ersten Gegenstands und der Auftrefffläche eine diffuse Durchlässigkeit von mindestens 15 % der Laserstrahlung aufweist.

2. Verfahren nach Anspruch 1, des Weiteren umfassend, dass der eine oder die mehreren Keimbildner aus der Gruppe ausgewählt werden bestehend aus Natriummontanat, Natriumstearat, natriumneutralisierten aliphatischen Carbonsäuren mit 12 - 40 Kohlenstoffatomen und Natrium-PET.

3. Verfahren nach Anspruch 1, wobei der eine oder die mehreren Keimbildner ein zahlendurchschnittliches Molekulargewicht von weniger als etwa 5.000 aufweist/aufweisen.

4. Herstellungsgegenstand, der durch ein Verfahren zum Schweißen eines ersten polymeren Gegenstands an einen zweiten polymeren Gegenstand unter Anwendung von Laserstrahlung erhältlich ist, wobei der erste polymere Gegenstand für Laserstrahlung relativ durchlässig ist und der zweite Gegenstand für Laserstrahlung relativ opak ist, wobei die ersten und zweiten Gegenstände jeweils eine genau passende Oberfläche präsentieren, wobei der erste Gegenstand der genau passenden Oberfläche davon gegenüberliegend eine Auftrefffläche präsentiert; wobei das Verfahren die Schritte des Bringens der genau passenden Oberflächen der ersten und zweiten Gegenstände in physikalischen Kontakt, um eine Verbindung dazwischen zu bilden, und das Bestrahlen der ersten und zweiten Gegenstände mit der Laserstrahlung umfasst, derart, dass die Laserstrahlung auf die Auftrefffläche auftrifft, durch den ersten Gegenstand hindurchgeht und die genau passende Oberfläche des zweiten Gegenstands bestrahlt, wodurch die ersten und zweiten Gegenstände dazu gebracht werden, an der Verbindung der genau passenden Oberflächen verschweißt zu werden, wobei:
der erste polymere Gegenstand aus einer polymeren Komponente gebildet ist umfassend
(i) Poly(ethylenterephthalat); und
(ii) einen oder mehrere Keimbildner;
wobei der eine oder die mehreren Keimbildner durch die Tatsache **gekennzeichnet** ist/sind, dass er/sie nicht mehr als 7 % seines/ihres Gewichts an Wasser absorbiert/adsorbieren;
wobei der eine oder die mehreren Keimbildner in der polymeren Komponente in einer Menge vorliegt/vorliegen, die ausreicht, dass die polymere Komponente eine Kristallisationshalbwertzeit von weniger als 20 Minuten bei einer Temperatur von 105°C aufweist, wenn sie durch Differentialscanningkalorimetrie gemessen wird; und
der erste polymere Gegenstand durch eine Dicke zwischen der genau passenden Oberfläche des ersten Gegenstands und der Auftrefffläche eine diffuse Durchlässigkeit von mindestens 15 % der Laserstrahlung aufweist.

5. Herstellungsgegenstand nach Anspruch 4 ausgewählt aus der Gruppe bestehend aus Gehäusen, einschließlich denjenigen für elektrische und elektronische Sensoren und Scheinwerfer, Pumpen, Motoren, Ventile, Anzeigen und Tintenstrahlpatronen und Verbindungen und Kupplungen.

## Revendications

1. Procédé de soudure d'un premier objet polymère à un second objet polymère en utilisant un rayonnement laser, dans lequel ledit premier objet polymère est relativement transparent vis-à-vis dudit rayonnement laser et ledit second objet est relativement opaque vis-à-vis dudit rayonnement laser, lesdits premier et second objets présentant chacun une surface de liaison, ledit premier objet présentant une surface d'accrochage, opposée à ladite surface de liaison de celui-ci; ledit procédé incluant les étapes de mise en contact physique des surfaces de liaison desdits premier et second objets afin de former une jonction entre eux et l'irradiation desdits premier et second objets à l'aide dudit rayonnement laser afin que ledit rayonnement laser impacte la surface d'accrochage, passe à travers ledit premier objet et irradie ladite surface de liaison dudit second objet, provoquant la soudure desdits premier et second objets à la jonction des surfaces de liaison, moyennant quoi:
ledit premier objet polymère est formé d'un composant polymère comprenant: (i) du poly(téréphtalate d'éthylène); et (ii) un ou plusieurs agents(s) de nucléation;
ledit un ou plusieurs agent(s) de nucléation étant chacun **caractérisé par le fait qu'**il(s) n'absorbe(nt) pas plus de 7 % de leur poids dans l'eau;
ledit un ou plusieurs agent(s) de nucléation est(sont) présent(s) dans ledit composant polymère en une quantité suffisante, afin que ledit composant polymère ait une demi-vie de cristallisation inférieure à 20 minutes à une température de 105°C, lorsque mesurée par calorimétrie à compensation de puissance; et
ledit premier objet polymère fait preuve, à travers une épaisseur entre ladite surface de liaison dudit premier objet et ladite surface d'accrochage, d'une transmittance de diffusion d'au moins 15 % dudit rayonnement laser.

2. Procédé selon la revendication 1, comprenant en outre ledit un ou plusieurs agent(s) de nucléation qui est(sont) choisi(s) parmi le groupe constitué du montanate de sodium, stéarate de sodium, des acides carboxyliques aliphatiques neutralisés par du sodium avec 12 à 40 atomes de carbone et du PET sodique.

3. Procédé selon la revendication 1, dans lequel ledit un ou plusieurs agent(s) de nucléation a(ont) un poids moléculaire moyen en nombre inférieur à environ 5 000.

4. Article de manufacture pouvant être obtenu par un procédé de soudage d'un premier objet polymère à un second objet polymère utilisant le rayonnement laser, dans lequel ledit premier objet polymère est relativement transparent vis-à-vis dudit rayonnement laser et ledit second objet est relativement opaque vis-à-vis dudit rayonnement laser, lesdits premier et second objets présentant chacun une surface de liaison, ledit premier objet présentant une surface d'accrochage, opposée à ladite surface de liaison de celui-ci; ledit procédé incluant les étapes de mise en contact physique des surfaces de liaison desdits premier et second objets, afin de former une jonction entre eux et l'irradiation desdits premier et second objets avec ledit rayonnement laser, afin que ledit rayonnement laser impacte la surface d'accrochage, passe à travers ledit premier objet et irradie ladite surface de liaison dudit second objet, provoquant la soudure desdits premier et second objets au point de jonction des surfaces de liaison, dans lequel:
ledit premier objet polymère est formé d'un composant polymère comprenant: (i) du poly(téréphtalate de éthylène); et (ii) un ou plusieurs agent(s) de nucléation;
ledit un ou plusieurs agent(s) de nucléation est(sont) **caractérisé**(s) par le fait qu'il(s) n'absorbe(nt) pas plus de 7 % de leur poids dans l'eau;
ledit un ou plusieurs agent(s) de nucléation est(sont) présent(s) dans ledit composant polymère en une quantité suffisante afin que ledit composant polymère ait une demi-vie de cristallisation inférieure à 20 minutes à une température de 105°C, lorsque mesurée par calorimétrie différentielle à compensation de puissance; et
ledit premier objet polymère fait preuve, à travers une épaisseur comprise entre ladite surface de liaison dudit premier objet et ladite surface d'accrochage, d'une transmittance de diffusion d'au moins 15 % dudit rayonnement laser.

5. Article de manufacture conformément à la revendication 4, choisi parmi le groupe constitué des boîtiers, incluant ceux destinés aux capteurs électriques et électroniques et aux lampes frontales, des pompes, des moteurs, des valves, des affichages, et des cartouches d'encre pour jet d'encre et des connecteurs et des dispositifs de raccordement.
